# EUROPÄISCHE PATENTANMELDUNG

(11) **EP 0 821 455 A1**
(43) Veröffentlichungstag der Anmeldung: **28.01.1998**
(21) Anmeldenummer: 97111152.1
(22) Anmeldetag: 03.07.1997
(51) Int. Cl.: H02B 1/052

(54) **Hutschienenbefestigungseinrichtung**

(30) Priorität: 25.07.1996 DE 29612899 U
(71) Anmelder: Klöckner-Moeller GmbH, 53115 Bonn (DE)
(72) Erfinder: Händler, Kurt, 53119 Bonn (DE)

(57) **Zusammenfassung**

Die Erfindung betrifft eine Hutschienenbefestigungseinrichtung für von einem Formgehäuse (2) umgebene Geräte, die eine kanalartige Vertiefung (4) mit einer der Hutschiene entsprechenden Breite, eine vorstehende feste Zunge (6) sowie einen zum Aufschnappen dienenden, federbelasteten Schieber enthält. Durch die Zunge (6) und den Boden der kanalartigen Vertiefung (4) wird eine Öffnung gebildet, über die das Gerät an der Hutschiene einhängbar ist. Am Gerät ist ein gegen die Andruckkraft der Zunge (6) wirkendes federelastisches Halteblech (8), dessen Härte größer als die der Hutschiene ist, befestigt, das mindestens eine beim Aufsetzen des Gerätes sich in die Oberfläche der Hutschiene eingrabende Spitze (11) aufweist.

## Beschreibung

Die Erfindung betrifft eine Hutschienenbefestigungseinrichtung für Geräte, insbesondere für elektrische Schaltgeräte, nach dem Oberbegriff des Anspruches 1.

Aus der Druckschrift DE 93 16 899 U1 ist eine derartige Hutschienenbefestigungseinrichtung bekannt, durch die das mit einem Formgehäuse umgebene Gerät auf eine Hutschiene aufschnappbar ist und die im wesentlichen aus einer kanalartigen Vertiefung mit einer der Hutschiene entsprechenden Breite, einer vorstehenden festen Zunge sowie einem zum Aufschnappen dienenden, federbelasteten Schieber gebildet ist. Durch die Zunge und den Boden der kanalartigen Vertiefung wird eine Öffnung gebildet, über die das Gerät an der Hutschiene einhängbar ist. Zur Erschwerung eines seitlichen Wegrutschens des Gerätes auf der Hutschiene bei auftretenden Querkräften weist der Boden ein erstes angeformtes Abstützelement auf, wobei dieses in Verbindung mit der Zunge das unverrastete, über die Öffnung an der Hutschiene eingehängte Gerät derart abstützt, daß es bei der Halterung absteht und der Boden in einem Winkel von 5° bis 40° gegenüber der Breitenausrichtung der Hutschiene geneigt ist und daß das Gerät bei Andruck bis zur Verrastung des Schiebers durch eine entgegen dem Andruck wirkende Hebelkraft des Abstützelementes in Verbindung mit der Zunge an die zwischen beiden liegende Hutschiene gepreßt wird. Das erste Abstützelement ist entweder als eine in die Öffnung reichende Abschrägung oder Erhebung des Bodens ausgebildet. Bevorzugt weist die Zunge eine Nase als zweites angeformtes Abstützelement auf. Der gegen die Querkräfte wirkende seitliche Kraftschluß hängt erheblich von der Klemmkraft selbst und dem Reibwert der klemmenden Werkstoffpaarung ab, wobei in nachteiliger Weise der Reibwert bei dieser Paarung Kunststoff-Metall relativ niedrig ist und die Klemmkraft durch alterungsbedingtes Setzen des Kunststoffes, insbesondere bei höheren Umgebungstemperaturen, nachläßt.

Der Erfindung liegt daher die Aufgabe zugrunde, die Verbindung zwischen Gerät und Hutschiene gegen Querkräfte dauerhaft zu verbessern.

Ausgehend von einer Hutschienenbefestigungseinrichtung der eingangs genannten Art wird die Aufgabe erfindungsgemäß durch die kennzeichnenden Merkmale des Anspruches 1 gelöst. Das spitz ausgebildete Halteblech kerbt aufgrund seiner größeren Härte beim Aufsetzen das Gerätes die Hutschiene an, wodurch eine sowohl form- als auch kraftschlüssige Verbindung entsteht, die großen Querkräften widersteht. Die so verbesserte Verbindung wird weiterhin durch die Verwendung federelastischen, d.h. nichtfließenden Materials stabilisiert. Das Halteblech kann von vornherein als auch nachträglich und auf verschiedene Weise am Formgehäuse des Gerätes befestigt werden, wie beispielsweise durch Verschrauben, Vernieten, Warmverformen, Verschallen oder dergleichen.

Weitere vorteilhafte Ausgestaltungen der Erfindung sind den Unteransprüchen zu entnehmen. Zweckmäßig erweist sich die außermittige Anordnung von zwei derartigen Zungen und Halteblechen. Haltebleche mit vom Formgehäuseboden weg weisenden Spitzen, insbesondere bei flacher Ausbildung, sind einfach herzustellen und zu befestigen. Die Ausbildung des Haltebleches bzw. der Haltebleche in U-Form mit gegeneinander klemmend die Hutschiene kerbenden Spitzen stellt eine besonders wirkungsvoll die gestellte Aufgabe erfüllende Ausführungsform der Hutschienenbefestigungseinrichtung dar, weil in diesem Falle ein kraftvoller Form- und Kraftschluß zwischen den gegenüberstehenden Spitzen des Haltebleches und der Hutschiene besteht, der zeitbeständig ist, da fließendes bzw. sich setzendes Material bei dieser Verbindung nicht beteiligt ist. Es besteht die Möglichkeit das Halteblech entweder am Formgehäuseboden oder an bzw. in der Seitenwand des Formgehäuses zu befestigen.

Die Erfindung soll nachstehend an einem Ausführungsbeispiel, aus dem weitere Einzelheiten und Vorteile zu ersehen sind, näher erläutert werden. In der zugehörigen Zeichnung zeigt
- Figur 1:: eine erste Ausführungsform der erfindungsgemäßen Hutschienenbefestigungseinrichtung in auszugsweiser und vergrößerter Unteransicht;
- Figur 2:: die erste Ausführungsform in seitlicher Schnittdarstellung II-II nach Fig. 1;
- Figur 3:: eine zweite Ausführungsform der erfindungsgemäßen Hutschienenbefestigungseinrichtung in auszugsweiser und vergrößerter Unteransicht;
- Figur 4:: ein Halteblech als Detail von Fig. 3 in demgegenüber vergrößerter Seitenansicht.

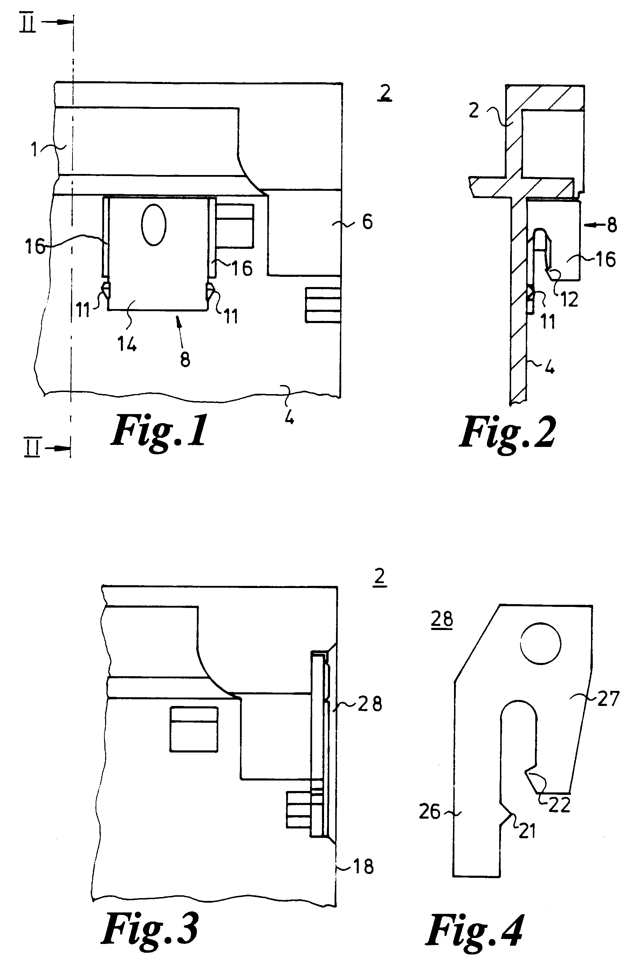

Zur Darstellung der sich vom Stand der Technik unterscheidenden Bestandteile ist von der ersten Ausführungsform in Fig. 1 und Fig. 2 nur die rechte obere Ecke des Formgehäusebodens 1 des Gerätes dargestellt, wobei die linke obere Ecke dazu symmetrisch ist. In bekannter Weise besteht die Hutschienenbefestigungseinrichtung aus einer in den Boden 1 des Formgehäuses 2 des Gerätes ausgebildeten kanalartige Vertiefung 4 mit einer der Hutschiene (nicht dargestellt) entsprechenden Breite, einer vorstehend angeformten Zunge 6 sowie einem zum Aufschnappen dienenden, federbelasteten Schieber (ebenfalls nicht dargestellt), wobei durch die Zunge 6 und den Boden der kanalartigen Vertiefung 4 eine Öffnung gebildet wird, über die das Gerät an der Hutschiene einhängbar ist. Am Formgehäuseboden 1 ist ein gegen die Andruckkraft der Zunge 6 wirkendes federelastisches Halteblech 8, dessen Härte größer als die der Hutschiene ist, angenietet. Das doppelt U-förmig ausgebildete Halteblech 8 weist vier beim Aufsetzen des Gerätes sich in die Oberfläche der Hutschiene eingrabende Spitzen 11, 12 auf. Die am Mittelsteg 14 seitlich angeordneten Spitzen 11 weisen vom Boden 1 des Formgehäuses 2 weg. Die an den U-förmigen Seitenschenkeln 16 endseitig angeordneten Spitzen 12, weisen zum Boden 1 des Formgehäuse 2 hin und sind gegenüber den Spitzen 11 jeweils versetzt. Die Spitzen 11, 12 üben beim Aufsetzen des Gerätes auf die Hutschiene eine klemmende Wirkung auf diese aus, wodurch sich die harten Spitzen 10, 12 in die Oberfläche der weicheren Hutschiene eingraben. Mit den so entstehenden Kerben wird eine dauerelastische kraft- und formschlüssige Verbindung geschaffen, die einen hohen Widerstand gegen seitliche Verschiebekräfte aufweist und keinen Alterungseinwirkungen unterliegt.

Die Hutschienenbefestigungseinrichtung nach Fig. 3 und 4 unterscheidet sich von der vorstehend dargelegten Ausführungsform im wesentlichen dadurch, daß in jede Seitenwand 18 des Formgehäuses 2 ein flaches U-förmiges federelastisches Halteblech 28 eingenietet ist. An jedem Seitenschenkel 26, 27 des Haltebleches 28 ist gegeneinander versetzt wieder je eine Spitze 21, 22 ausgebildet. Die positiven Wirkungen dieser Ausführungsform sind mit denen der vorstehend beschriebenen Ausführungsform vergleichbar.

## Patentansprüche

1. Hutschienenbefestigungseinrichtung für von einem Formgehäuse (2) umgebene Geräte, die eine kanalartige Vertiefung (4) mit einer der Hutschiene entsprechenden Breite, eine vorstehende feste Zunge (6) sowie einen zum Aufschnappen dienenden, federbelasteten Schieber enthält, wobei durch die Zunge (6) und den Boden der kanalartigen Vertiefung (4) eine Öffnung gebildet wird, über die das Gerät an der Hutschiene einhängbar ist, **dadurch gekennzeichnet**, daß am Gerät ein gegen die Andruckkraft der Zunge (6) wirkendes federelastisches Halteblech (8; 28), dessen Härte größer als die der Hutschiene ist, befestigt ist, das mindestens eine beim Aufsetzen des Gerätes sich in die Oberfläche der Hutschiene eingrabende Spitze (11, 12; 21, 22) aufweist.

2. Hutschienenbefestigungseinrichtung nach Anspruch 1, **dadurch gekennzeichnet**, daß eine weitere derartige Zunge sowie wenigstens ein derartiges Halteblech vorgesehen sind und beide Haltebleche (8; 28) im Bereich der Seitenwände (18) des Formgehäuses (2) angeordnet sind.

3. Hutschienenbefestigungseinrichtung nach Anspruch 1 oder 2, **dadurch gekennzeichnet**, daß die mindestens eine Spitze (11; 21) vom Formgehäuseboden (1) weist.

4. Hutschienenbefestigungseinrichtung nach Anspruch 3, **dadurch gekennzeichnet**, daß das Halteblech im wesentlichen flach ausgebildet ist.

5. Hutschienenbefestigungseinrichtung nach einem der Ansprüche 1 bis 3**, dadurch gekennzeichnet**, daß das Halteblech (8; 28) U-förmig ausgebildet ist und mindestens zwei versetzt gegeneinander weisende und beim Aufsetzen des Gerätes die Hutschiene klemmende Spitzen (11, 12; 21, 22) aufweist.

6. Hutschienenbefestigungseinrichtung nach einem der Ansprüche 1 bis 5, **dadurch gekennzeichnet**, daß das Halteblech (8) am Formgehäuseboden (1) befestigt ist.

7. Hutschienenbefestigungseinrichtung nach einem der Ansprüche 1 bis 5, **dadurch gekennzeichnet**, daß das Halteblech (28) an der Seitenwand (18) befestigt ist.
